# EUROPEAN PATENT SPECIFICATION

(11) **EP 4 242 165 B1**
(45) Date of publication and mention of the grant of the patent: **20.11.2024**
(21) Application number: 23157397.3
(22) Date of filing: 17.02.2023
(51) Int. Cl.: B66F 9/075, H02K 5/20, H02K 1/278, H02K 7/14

(54) **INDUSTRIAL TRUCK WITH IMPROVED MOTOR COOLING**
FLURFÖRDERZEUG MIT VERBESSERTER MOTORKÜHLUNG
CHARIOT DE MANUTENTION DOTÉ D'UN REFROIDISSEMENT DE MOTEUR AMÉLIORÉ

(30) Priority: 07.03.2022 IT 202200004241
(43) Date of publication of application: 13.09.2023
(73) Proprietor: Toyota Material Handling Manufacturing Italy S.p.A, 40132 Bologna (IT)
(72) Inventor: Pesso, Tommaso, 40132 Bologna (IT)
(74) Representative: Hoffmann Eitle

(56) References cited:
- EP-A1- 2 679 534
- EP-A2- 2 645 545
- DE-A1- 10 211 193
- DE-A1- 102012 112 377
- JP-A- 2014 023 387

## Description

### TECHNICAL FIELD OF THE INVENTION

The field of the present invention concerns an industrial truck, such as a forklift truck, including an improved cooling system for the wheel traction motor.

### BACKGROUND OF THE INVENTION

Forklift trucks including a chassis (or frame), a mast pivotally mounted on the chassis and a fork slidably mounted on the mast are known in the art. The fork is used to lift a load, for example for transporting ware in a store. The mast can be tilted with respect to the chassis to facilitate loading and unloading of the ware.

It is also known to provide an electric motor for the traction of the wheels of the forklift truck. The electrical motor can be mounted e.g. on the front axle of the truck for the traction of the front wheels. In order to cool the electrical motor, a cooling system has been proposed in the prior art, wherein an air fan ventilates the outer surface of the electrical motor housing. However, in this configuration the cooling system can have failures due to the deposition of dust on the blades of the air ventilator and can produce disturbing noise for the driver of the truck. Furthermore, the air cooling system may not be capable of properly dissipating the heat generated by the power electronics module (such as an inverter) incorporated in the truck for the control of the currents to be fed to the electrical motor. An industrial truck according to the preamble of claim 1 is known from EP 2 679 534 A1.

### SUMMARY OF THE INVENTION

In view of the above, it is an object of the present invention to provide an industrial truck which ensures an efficient and improved cooling of the electrical traction motor.

It is a further object of the present invention to provide an industrial truck which ensures an improved cooling of the electrical traction motor and of the power electronics module associated to the electrical motor.

It is a further object of the present invention to provide an industrial truck which is less prone to failures of the cooling system compared to the conventional systems.

It is a further object of the present invention to provide an industrial truck which can ensure an improved cooling of the electrical motor while minimizing the complexity of the cooling system, in particular by minimizing the overall number of components to be foreseen in the combined system "axle structure/motor cooling system".

In view of the above object, the present invention proposes an industrial truck including:
- a frame,
- a lifting assembly including a movable lifting element for lifting a load,
- at least an electrical motor for the traction of wheels of the industrial truck, and
- an axle structure connected to the frame of the truck by means of flanges and constituted by a left portion, a right portion and a housing of the electrical motor, the housing being interposed between the left portion and the right portion, the housing being joined to each of the left portion and the right portion, wherein each of the left portion and the right portion comprises supporting means for supporting the lifting assembly, and the housing of the electrical motor is configured to withstand a bending stress induced in the housing by the weight of the lifting assembly,

wherein the housing includes an outer surface on which a power electronic module for controlling the electric motor is mounted,
wherein a circumferential portion of the housing surrounding the electrical motor around a motor axis includes one or more cooling ducts only in a region between a recess of the housing configured to accommodate the electric motor and the outer surface for cooling the power electronic module during the operation of the industrial truck, and wherein a gap between a stator and a rotor of the electrical motor forms a cooling path for the circulation of cooling liquid to refrigerate the electrical motor.

The arrangement according to the invention allows to achieve a symmetrical distribution of the stress on the front axle structure, while obtaining a uniform and efficient dissipation of the heat generated by the electrical motor and by the power electronic module. Concentrated peaks of temperature can be avoided in the proximity of the power electronic module, thus enhancing reliability of the motor control. In addition, by using cooling ducts embedded in the front axle structure, the cooling system is less noisy and less prone to failure compared to conventional air cooling systems. Since the housing of the electrical motor and the gap between stator and rotor of the electrical motor form the cooling ducts for cooling both the electrical motor and the power electronic module, an efficient cooling of the heated components is ensured without the need of an additional cooling circuit. Furthermore, since the cooling ducts in the housing are formed only in the region between the motor and the power electronic module, the motor housing can be advantageously dimensioned to withstand the bending stresses without the need of forming holes in the whole periphery of the housing, especially in the lower part. The heat generated in the axle structure can thus be efficiently removed while an advantageous distribution of the bending stress on the axle is achieved, since the supports of the lifting assembly are formed on the lateral left and right portions.

### BRIEF DESCRIPTION OF THE DRAWINGS

The above and other advantages of the present invention will be illustrated with reference to an example embodiment of the invention, described with reference to the appended drawings listed as follows.
Fig. 1 shows a lateral schematic view of an industrial truck according to the invention;
Fig. 2 shows the frame of the industrial truck with the lifting assembly detached from the frame;
Fig. 3 shows an embodiment of front axle structure according to the invention;
Fig. 4 shows the front axle structure with a part of the housing removed;
Fig. 5 shows a cross section of the electrical motor and the related housing along a vertical plane containing the axis of the front axle structure;
Fig. 6 shows a cross section of the electrical motor and the related housing along a vertical plane perpendicular to the axis of the front axle structure;
Fig. 7 shows a view of a component of the electric motor housing;

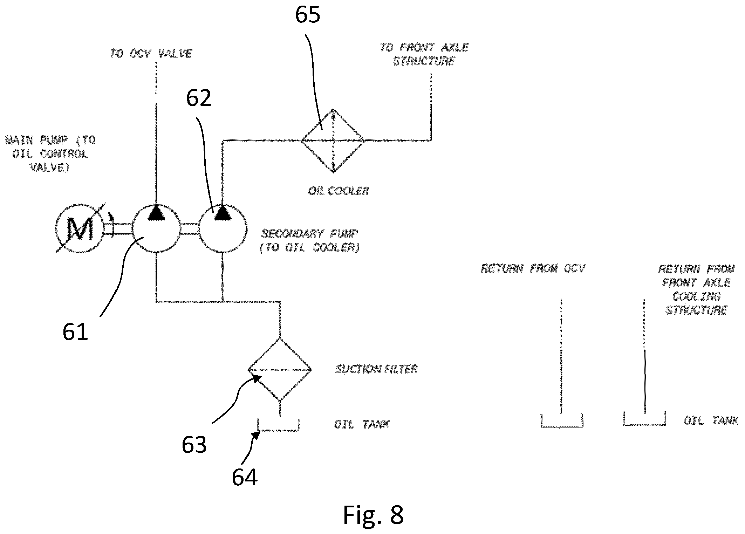

Fig. 8 shows a scheme of the hydraulic circuit of the cooling system and of the actuators of the lifting assembly.

### DETAILED DESCRIPTION OF THE PREFERRED EMBODIMENTS

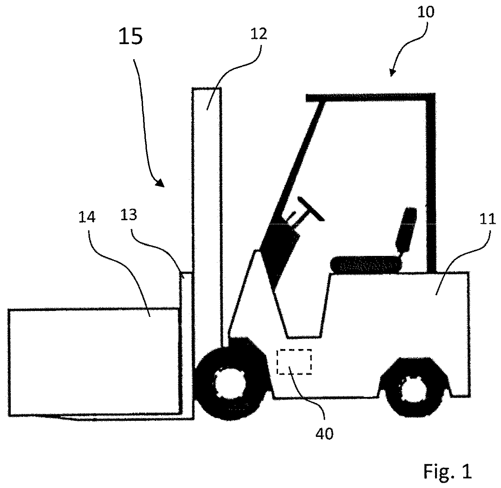

Figure 1 shows a schematic representation of an industrial truck 10 according to an embodiment of the present invention, e.g. a forklift truck. The industrial truck 10 includes a frame 11, a mast 12 pivotally mounted on the frame 11 and lifting element 13 (e.g. a fork, even though also other material handling devices can be mounted on the truck) for lifting a load 14; the lifting element 13 is mounted on the mast 12 in a slidable manner along the mast 12; in figure 1 the lifting element 13 is shown in a lowered position. The mast 12 is pivotally mounted on the chassis 11 around a pivot, which is preferably located close to the front axle of the truck 10; however, the mast 12 and the lifting assembly could be positioned also close to the rear axle of the truck. The mast 12 may be tilted over a range of directions encompassing a vertical direction. The mast 12 forms part of a lifting assembly 15, which is configured to lift the lifting element 13 to lift a load. The lifting assembly 15 includes actuating means (not shown) for causing the lifting element 13 to slide along the mast 12; the actuating means can be implemented according any known configuration in the art. The industrial truck 10 is electrically driven. Further, the industrial truck 10 might include two wheels on the front axle and one or two wheels on the rear axle, as well as steering wheels for steering the truck while driving.

The truck 10 further includes a control unit 40 (schematically represented in dashed lines in fig. 1) configured to control the lifting actuator and a mast tilting actuator. The control unit 40 may control also further actuators of the truck, i.e. a wheel drive system. The wheel drive system may include one or more motors for driving the wheels of the truck and a braking system. The motor can be an electrical motor such as a reluctance, induction or permanent magnet motor, or the like.

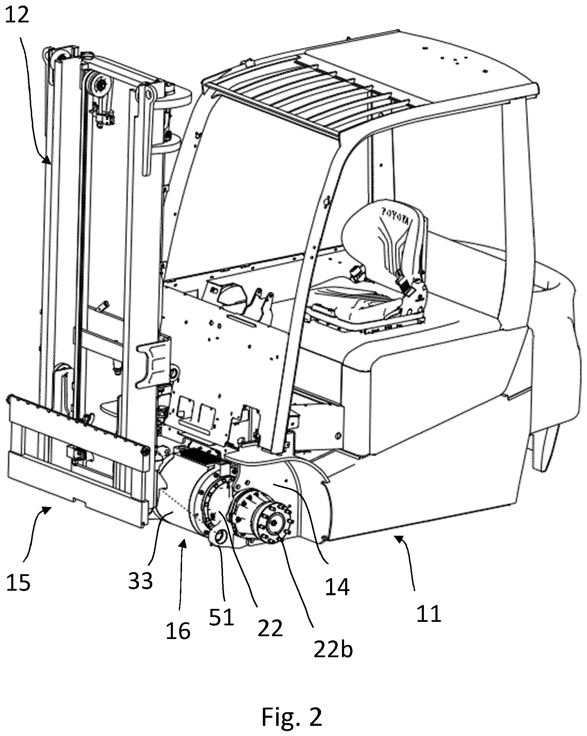

Figure 2 shows the frame 11, 14 of the industrial truck and the front axle structure 16 connected to the frame, wherein the wheels are removed in the drawing and the lifting assembly 15 is shown detached from the frame 11, 14. The front axle structure 16 includes a housing 33 for receiving the electrical motor for the traction of the front wheels, and a left portion 22 on which supporting means 51 are formed to support the lifting assembly 15 (a right portion of the front axle structure is described later). The left portion 22 is also connected to the frame 14 and supports the wheel carrier element 22b.

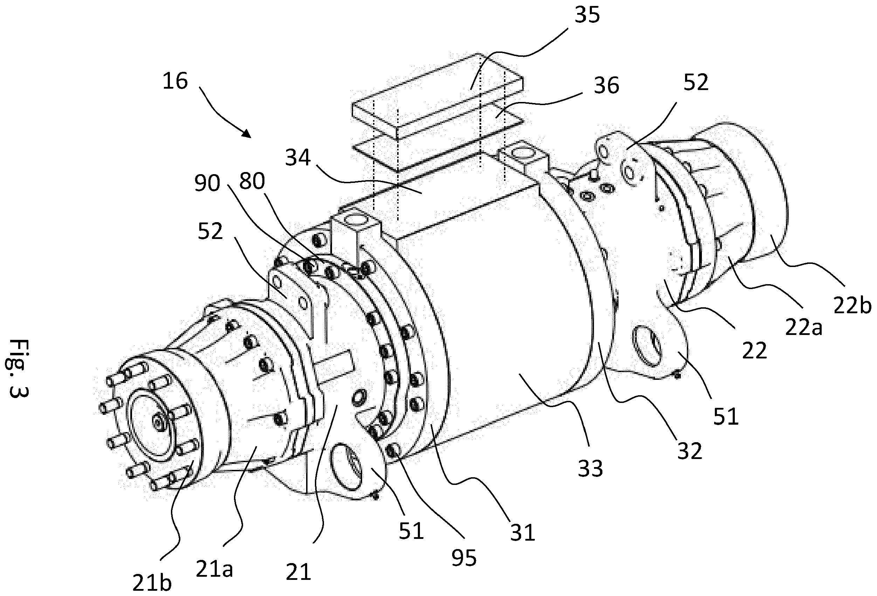

Figure 3 shows the front axle structure 16 according to an embodiment of the invention. The front axle structure 16 is connected to the frame 14 of the truck by means of flanges 52. The front axle structure is constituted by a left portion 22, a right portion 21 and a housing 31, 32, 33 of the electrical motor joined together with each other. The housing 31, 32, 33 is interposed between the left portion 22 and the right portion 21.

The left portion 22 and the right portion 21 may be directly joined to the housing 31, 32, 33, i.e. without the interposition of other elements, although other arrangement may be possible. Each of the left portion 22 and the right portion 21 comprises supporting means 51 (e.g. flanges) for supporting the lifting assembly 15. Furthermore, preferably each of the left portion 22 and the right portion 21 includes a flange 52 for the connection to the frame 14, preferably a vertical flange formed on the upper part of the front axle structure 16. The left portion 22 and the right portion 21 are each formed preferably as a single integral piece, e.g. made of cast iron.

The housing 31, 32, 33 of the electrical motor includes cooling ducts (described later more in details) and is configured to withstand a bending stress induced in the housing by the weight of the lifting assembly 15.

In one embodiment, the right portion 21 includes a circular flange 80 for connection to the housing 31-33 by means of a plurality of fastening means 90. The left portion 22 include a similar flange for the connection the housing of the motor.

Preferably, opposite to the housing 31-33, the left portion 22 is connected to a further element 22a which supports the wheel carrier element 22b in a rotatable manner. Similarly, the right portion 21 is connected to a further element 21a which supports the wheel carrier element 21b.

The housing of the electrical motor includes, preferably, a longitudinally hollow body 33 forming the recess for accommodating the electrical motor and two end pieces 31, 32. The longitudinally hollow body 33 circumferentially surrounds the electrical motor. Each of the longitudinally hollow body 33 and two end pieces 31, 32 are formed as a single integral piece. The two end pieces 31, 32 are attached respectively to opposite longitudinal open ends of the longitudinally hollow body 33. The longitudinal hollow body 33 is preferably substantially cylindrical. The two end pieces 31, 32 have the shape of a circular plate. The two end pieces 31, 32 are connected to the longitudinally hollow body 33 by means of a plurality of fastening means 95 distributed along the outer circumference of the end pieces 31, 32.

The housing includes an outer surface 34 on which a power electronic module 35 (e.g. an inverter for feeding the currents to the electrical motor) for controlling the electric motor is mounted. Preferably, the outer surface 34 for mounting the power electronic module is formed on the hollow body 33 of the housing, most preferably on the upper part of the front axle structure 16, i.e. the power electronic module 35 is placed above the front axle structure 16. Preferably, the outer surface 34 is planar.

In one preferred embodiment, the components of the housing 31, 32, 33 are formed by cast iron, most preferably by ductile cast iron. Ductile cast iron is preferred to achieve a desired mechanical resistance, e.g. resistance in case of collisions. However, although cast iron is the preferred material, the components forming the housing 31-33 could be also formed with aluminium, in case of very low nominal loads of the industrial truck.

The outer surface 34 can be formed with raw cast iron to avoid an expensive machining process after casting. In this case, a layer 36 of thermally conductive material is applied to the outer surface 34 and the power electronic module 35 is mounted on the layer of conductive material 36, which is interposed between the power electronic module 35 and the outer surface 34. Preferably, the layer of conductive material 36 is made of graphite and is formed with a Pyrolytic Graphite Sheet, PGS. This allows to ensure a proper thermal conduction from the power electronic module 35 to the housing 31-33 even if the outer surface 34 is not machined after casting. In the figure, the layer of conductive material 36 and the power electronic module 35 are shown in exploded schematic view. Preferably, the outer surface 34 has a rectangular elongated shape extending along a longitudinal direction of the axle. The power electronic module 35 has advantageously a planar shape and covers at least 80% of the outer surface 34 when mounted on the housing 31-33. The layer 36 occupies the whole space between the power electronic module 35 and the outer surface 34.

Alternatively, the planar outer surface 34 could be processed by machining to obtain a smooth surface; in this case, the layer 36 could be omitted and sufficient thermal conduction may be achieved via a smooth machined surface 34.

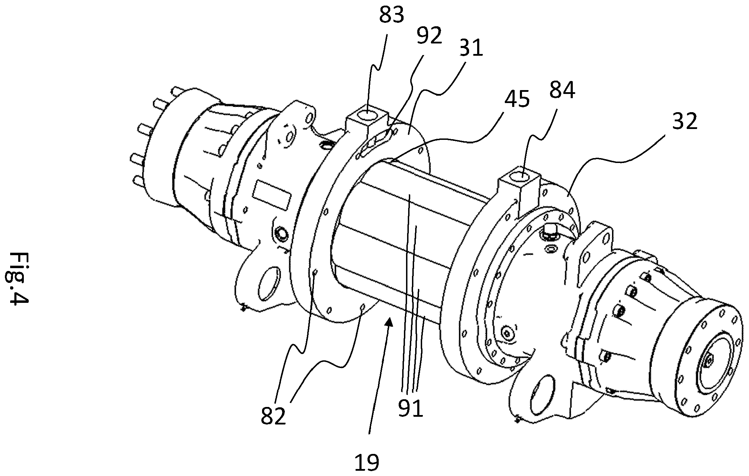

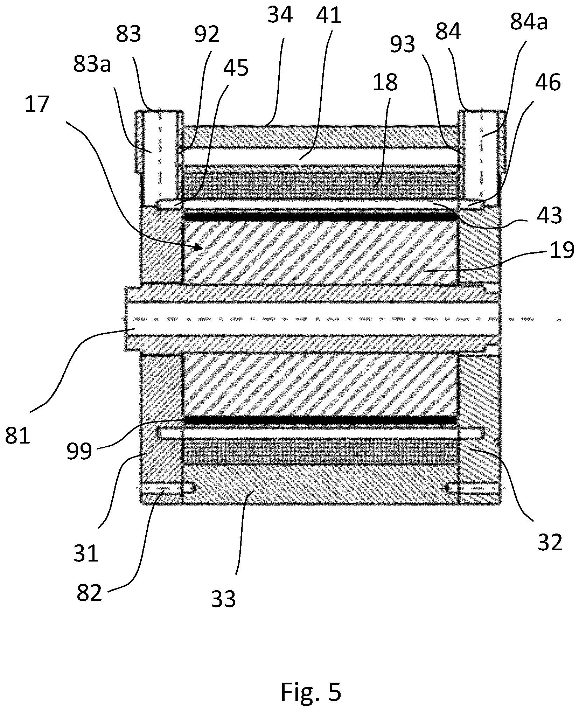

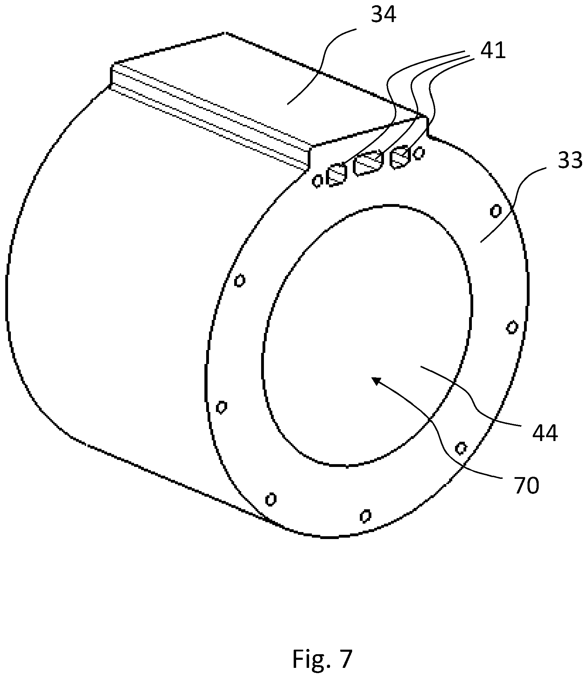

Figure 4 shows the front axle structure of figure 3 in which the hollow body 33 and the stator 18 of the electrical motor 17 are removed and only the rotor 19 of the electrical motor 17 is shown. Figure 5 is a cross section of the housing 31-33, in which the motor 17 is shown. Figure 7 shows the hollow body 33 taken alone.

As well illustrated at figures 4, 5, 6 and 7, the longitudinally hollow body 33 includes cooling ducts 41 that are in communication with a first manifold duct 92 formed in the end piece 31 and with a second manifold duct 93 in the end piece 32. However, also a single cooling duct 41 could be present. In the preferred embodiment, three ducts 41 are present in the body 33, as visible in figure 7. In the present disclosure, with "longitudinal" it is intended in a direction parallel to the longitudinal extension of the front axle structure 16. Furthermore, the end piece 31 may include a first manifold duct 45 and the end piece 32 may include a second manifold duct 46 for feeding cooling liquid in the gap 43 between the rotor 19 and the stator 18 of the electrical motor. Preferably, the manifold ducts 45 and 46 may have an annular shape; the annular shape may be closed (i.e. without interruption) or may be open (i.e. with an interruption). For example, the first manifold duct 45 and the second manifold duct 46 may be formed as a groove in the end pieces 31 and 32, respectively. The groove may be open in the direction facing the hollow body 33 to allow supply and collection of the coolant to/from the cooling ducts (or paths) formed between the stator 18 and rotor 19 the gap therebetween.

As shown in figure 4, in one embodiment, the manifold duct 45 has a circular shape. The manifold duct 46 in the end piece 32 (shown in figure 5) has a similar shape and arrangement as duct 45. The end pieces 31 and 32 include a hole in a central position to allow the shaft 81 connected to the rotor 19 of the motor 17 to pass through the end pieces 31, 32 and transmit the wheel traction motion. The end piece 31 includes a plurality of longitudinal holes 82 formed between the outer rim of the end piece 31 and the manifold duct 45 for receiving fastening means for connecting the end piece 31 to the hollow body 33. The end piece 32 includes a similar arrangement of longitudinal holes for connection to the hollow body 33. The end piece 31 includes an inlet 83 for feeding cooling liquid into the manifold 45. The end piece 32 includes an outlet 84 for the collection of liquid exiting the housing through the manifold 46. The inlet 83 and the outlet 84 are preferably formed on the upper part of the front axle structure. The inlet 83 and the outlet 84 are preferably formed adjacent to the outer surface 34. The manifold ducts 45, 46 are in communication with rotating cooling ducts 43 formed between the stator 18 and the rotor 19 of the electrical motor. The ducts 41 arranged close to the outer surface 34 for cooling the power electronic module may be in communication with respective ducts 83a, 84a in the end pieces 31, 32 that connect the inlet/outlet 83, 84 with the respective manifold ducts 45, 46. The ducts 83a and 84a extend advantageously along a substantially vertical direction. The inlet 83 and the outlet 84 are connected to an external hydraulic circuit (not shown in fig. 4) configured for the circulation of the cooling liquid inside the manifolds 45 and 46, the gap 43 between stator and rotor of the motor and the ducts 41 in the hollow body 33. The cooling liquid circulates in the front axle structure only in the motor housing 31, 32 and 33 and in the gap 43 between the rotor and the motor. The cooling liquid does not circulate in the left and right parts 21, 22 of the front axle structure 16.

The housing 31-33 of the electrical motor is thermally coupled with a stator 18 of the electrical motor 17, whereby in the cooling ducts 41 and in the gap 43 a cooling liquid flows to cool the electrical motor during the operation of the industrial truck. Specifically, as shown in figure 5, the stator 18 of the motor is formed with resin cast so as to adhere to the inner wall 44 of the hollow body 33 of the housing. The stator 18 is formed by casting resin in the housing to incorporate the stator windings.

The rotor 19 is fixed on the hollow shaft 81 which passes through the central holes in the end pieces 31 and 32. The shaft 81 is supported by bearings carried by the left and right portions 21, 22 of the front axle structure 16.

Preferably, the motor 17 is a permanent magnet motor. In this embodiment, the rotor 19 includes a plurality of magnets 99 forming the magnetic poles of the rotor. In a preferred embodiment, the rotor 19 includes a plurality of lobes 91 along its circumferential surface. The lobes 91 are preferably eight. Each lobe 91 is associated to a respective magnet 99 embedded in the lobe. Among two adjacent lobes 91, a groove 43 is formed, that in turns forms a cooling duct through which the cooling liquid circulates. In the preferred embodiment, eight cooling ducts 43 (or cooling paths) are formed between the successive eight lobes 91. However, also a different number of lobes 91 can be considered. The outer shape of the lobes 91 may correspond to a segment of a circumference. In operation, the cooling paths 43 rotate as the rotor 18 rotates, so as to uniformly cool the whole periphery of the stator 18.

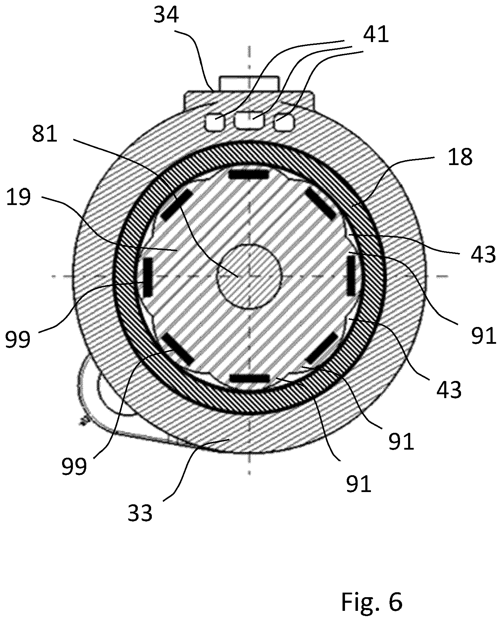

As well shown in figures 6 and 7, in a region of the housing 31-33 between the outer surface 34 and a recess 70 configured to accommodate the electric motor 17, the housing 31-33 (and specifically the hollow body 33 of the housing in the embodiment shown in the figures) includes at least one power electronic module cooling duct 41 positioned between the stator 18 and the outer surface 34 for cooling the power electronic module during the operation of the industrial truck. According to a preferred embodiment, the housing includes cooling ducts 41 only in the region between the outer surface and the recess 70; more generally, the hollow body 33 of the housing does not include cooling ducts in the lower part of the housing, opposite to the outer surface 34 for supporting the power electronic module. The cooling ducts 41 in the housing have the purpose to cool the power electronic module mounted on the surface 34. The cooling liquid circulating in the gap between the rotor and the stator of the motor 17 (and, more specifically, in the paths 43 formed between the lobes 91 of the rotor 19 and the stator 18) serve for cooling the electric motor 17. Accordingly, an efficient cooling of the motor and of the power electronic module can be achieved, while providing cooling ducts in the housing only on the upper part close to the outer surface 34, so that no void parts is present e.g. in the lower part of the housing. This allows to achieve a desired mechanical strength to the bending stresses induced in the housing 31, 32 and 33 during operation of the industrial truck 10, while reducing the overall dimensioning of the parts of the housing 31, 32 and 33.

The power electronic module cooling ducts 41 are preferably more than one, most preferably three as shown in the figure 7. All the power electronic module cooling ducts 41 are positioned between the recess 70 and the outer surface 34 in the example shown in fig. 7. The hollow body 33 has a substantially cylindrical shape and the ducts 41 extend along a longitudinal direction of the hollow body 33, which in turn corresponds to the direction of the longitudinal axis of the front axle structure.

The cooling liquid enters the from the inlet 83 into the conduit 83a in the end piece 31, which distributes the cooling liquid to all cooling ducts 41 in the hollow body 33 and to the cooling paths 43 in the gap between the rotor and the stator of the electrical motor via the manifold duct 45. The cooling ducts 41 may be fed by the separate duct 83a. The cooling liquid is then collected by the manifold duct 46 in the end piece 32 and exits the housing of the electrical motor via the outlet 84. As above discussed, the liquid from the cooling ducts 41 may be collected by a duct 84a separate from the manifold 46.

The industrial truck according to the invention further comprises a lifting assembly hydraulic circuit 60 for feeding liquid (e.g. oil) to one or more hydraulic actuators configured to move the lifting element 13 of the lifting assembly 15. Advantageously, the liquid circulating in the lifting assembly hydraulic circuit 60 is the same as the cooling liquid. According to one embodiment, the hydraulic circuit includes a first main pump 61 for pumping the oil to the oil control valves of the actuators of the lifting assembly 15 and a second pump 62 to send oil to the cooling circuit including the ducts formed in housing 31-33 of the electric motor in the front axle structure 16. Both pumps 61 and 62 may be driven by the same motor. Furthermore, both pumps 61, 62 draw oil from a common oil tank 64 via a suction filter 63. Before reaching the ducts in the housing 31-33 of the motor in the front axle structure, the oil pumped by the pump 62 circulates in an oil cooler 65 for cooling the liquid. After circulating in the circuit of the lifting assembly actuators and in the cooling circuit of the front axle structure, the oil is collected into the common oil tank 64.

The above description of embodiments applying the innovative principles of the invention is provided solely for the purpose of illustrating said principles and must thus not be considered as limiting the scope of the invention claimed herein.

For example, although a preferred embodiment involves the use of the oil circulating in the hydraulic circuit of the lifting assembly as refrigerant, also another liquid could be used. For example, also water could be used as refrigerant. In this case, an independent hydraulic circuit would be included in the industrial truck, separate from the hydraulic circuit for operating the actuators of the lifting assembly.

Furthermore, although in the above embodiments the front axle structure has been described, the same axle structure could also be implemented in the rear axle structure. In addition, cooling paths defined by the rotor and the stator in the gap therebetween may also have different shapes and numbers compared to the example described above. For example, the the number of lobes formed on the outer surface of the rotor can be between 5 and 10, whereby accordingly the cooling ducts or paths formed between adjacent lobes can be from 5 to 10. The grooves formed on the outer circumferential surface of the rotor can also have different shapes, e.g. a rectangular section.

According to an alternative, a circumferential portion of the housing (e.g. the hollow body 33) surrounding the electrical motor 17 around a motor axis includes one or more cooling ducts 41 in a region between a recess 70 of the housing configured to accommodate the electric motor 17 and the outer surface 34 for cooling the power electronic module during the operation of the industrial truck, while the circumferential portion of the housing (e.g. the hollow body 33) does not include cooling ducts in a part of the housing opposite to the outer surface 34, e.g. in the half of the housing positioned on the other side of the recess 70 with respect to the outer surface 34.

## Claims

1. An industrial truck including:
- a frame (11, 14),
- a lifting assembly (15) including a movable lifting element (13) for lifting a load (14),
- at least an electrical motor (17) for the traction of wheels of the industrial truck, and
- an axle structure (16) connected to the frame (14) of the truck by means of flanges (52) and constituted by a left portion (22), a right portion (21) and a housing (31, 32, 33) of the electrical motor, the housing (31, 32, 33) being interposed between the left portion (22) and the right portion (21), the housing (31, 32, 33) being joined to each of the left portion (22) and the right portion (21), wherein each of the left portion (22) and the right portion (21) comprises supporting means (51) for supporting the lifting assembly (15), and the housing of the electrical motor is configured to withstand a bending stress induced in the housing by the weight of the lifting assembly,
**characterized in that**
the housing includes an outer surface (34) on which a power electronic module (35) for controlling the electric motor is mounted,
wherein a circumferential portion of the housing (33) surrounding the electrical motor around a motor axis includes one or more cooling ducts (41) only in a region between a recess (70) of the housing configured to accommodate the electric motor (17) and the outer surface (34) for cooling the power electronic module during the operation of the industrial truck, and wherein a gap (43) between a stator (18) and a rotor (19) of the electrical motor forms a cooling path for the circulation of cooling liquid to refrigerate the electrical motor.

2. An industrial truck according to claim 1, wherein the rotor (19) includes a plurality of grooves defining, together with an inner surface of the stator (18), a plurality of rotating cooling ducts (43) surrounding the rotor (19).

3. An industrial truck according according to claim 2, wherein the outer circumferential surface of the rotor (19) includes a plurality of successive lobes (61), wherein each of the grooves is between adjacent lobes (91).

4. An industrial truck according according to claim 3, wherein the number of lobes (91) are between 5 and 10.

5. An industrial truck according any of the preceding claims, wherein the housing (31, 32, 33) includes a longitudinally hollow body (33) forming the recess (70) for accommodating the electrical motor (17) and two end pieces (31, 32), the two end pieces (31, 32) being attached respectively to opposite longitudinal ends of the longitudinally hollow body (33), wherein a first manifold duct (45, 83a) is formed in one of the two end pieces (31) and a second manifold duct (46, 84a) is formed in the other of the two end pieces (32), wherein the one or more cooling ducts (41) and the gap (43) are in communication with the first and second manifolds ducts to receive and output the cooling liquid.

6. An industrial truck according claim 5, wherein the left portion (22) is directly connected to one end piece (32) of the housing and the right portion (21) is directly connected to other end piece (31) of the housing.

7. An industrial truck according claim 6, wherein the manifold ducts in the first and second end pieces (31, 32) of the housing include an annular groove (45, 46) that is open towards the hollow body (33) of the housing for communicating with the gap (43).

8. An industrial truck according any of the preceding claims, wherein the left portion (22) and the right portion (21) are connected to the housing (31-33) by means of flanges (80).

9. An industrial truck according any of the preceding claims, wherein the housing (31, 32, 33) is formed by cast iron, preferably by ductile cast iron, wherein the outer surface (34) of the housing is formed by raw cast iron, wherein a layer (36) of thermally conductive material is fixed to the outer surface (34) and the power electronic module (35) is fixed on the layer of conductive material (36), wherein the layer (36) of thermally conductive material is preferably formed with a Pyrolytic Graphite Sheet, PGS.

10. An industrial truck according any of the preceding claims, further comprising a lifting assembly hydraulic circuit (60) for feeding liquid to one or more hydraulic actuators configured to move the lifting element, wherein liquid circulating in the lifting assembly hydraulic circuit is the same as the cooling liquid.

## Patentansprüche

1. Ein Flurförderfahrzeug enthaltend:
- einen Rahmen (11, 14),
- eine Hebevorrichtung (15) mit einem beweglichen Hebeelement (13) zum Heben einer Last (14),
- mindestens einen Elektromotor (17) für den Antrieb der Räder des Flurförderfahrzeugs und
- eine Achsstruktur (16), die mit dem Rahmen (14) des Fahrzeugs mittels Flanschen (52) verbunden ist und aus einem linken Teil (22), einem rechten Teil (21) und einem Gehäuse (31, 32, 33) des Elektromotors besteht, wobei das Gehäuse (31, 32, 33) zwischen dem linken Teil (22) und dem rechten Teil (21) angeordnet ist, das Gehäuse (31, 32, 33) jeweils mit dem linken Teil (22) und dem rechten Teil (21) verbunden ist, wobei jeweils der linke Teil (22) und der rechte Teil (21) das Stützmittel (51) zum Stützen der Hebevorrichtung (15) umfasst und das Gehäuse des Elektromotors so gestaltet ist, dass es einer Biegespannung standhält, die in dem Gehäuse durch das Gewicht der Hebevorrichtung induziert wird,
**dadurch gekennzeichnet, dass** das Gehäuse eine Außenfläche (34) enthält, auf der ein leistungselektronisches Modul (35) zur Steuerung des Elektromotors montiert ist,
wobei ein umlaufender Teil des Gehäuses (33), der den Elektromotor um eine Motorachse umgibt, einen oder mehrere Kühlkanäle (41) nur in einem Bereich zwischen einer Ausnehmung (70) des Gehäuses, die zur Aufnahme des Elektromotors (17) konfiguriert ist, und der Außenfläche (34) zur Kühlung des leistungselektronischen Moduls während des Betriebs des Flurförderfahrzeugs, enthält, und wobei ein Spalt (43) zwischen einem Stator (18) und einem Rotor (19) des Elektromotors einen Kühlweg für die Zirkulation von Kühlflüssigkeit zur Kühlung des Elektromotors bildet.

2. Flurförderfahrzeug nach Anspruch 1, wobei der Rotor (19) eine Vielzahl von Rillen enthält, zusammen mit einer Innenfläche des Stators (18), eine Vielzahl von rotierenden Kühlkanäle (43), die den Rotor (19) umgeben.

3. Flurförderfahrzeug nach Anspruch 2, wobei die äußere Umfangsfläche des Rotors (19) eine Vielzahl von aufeinanderfolgenden Kolben (61) enthält, wobei jede der Rillen zwischen benachbarten Kolben (91) liegt.

4. Flurförderfahrzeug nach Anspruch 3, wobei die Anzahl der Kolben (91) zwischen 5 und 10 liegt.

5. Flurförderfahrzeug nach einem der vorhergehenden Ansprüche, wobei das Gehäuse (31, 32, 33) einen Längshohlkörper (33), der die Ausnehmung (70) zur Aufnahme des Elektromotors (17) bildet, und zwei Endstücke (31, 32) enthält, wobei die zwei Endstücke (31, 32) jeweils an gegenüberliegenden Längsenden des Längshohlkörpers (33) befestigt sind, wobei ein erster Verteilerkanal (45, 83a) in einem der beiden Endstücke (31) und ein zweiter Verteilerkanal (46, 84a) in dem anderen der beiden Endstücke (32) ausgebildet ist, wobei der eine oder die mehreren Kühlkanäle (41) und der Spalt (43) mit den ersten und zweiten Verteilerkanälen in Verbindung stehen, um die Kühlflüssigkeit aufzunehmen und abzugeben.

6. Flurförderfahrzeug nach Anspruch 5, wobei der linke Teil (22) direkt mit einem Endstück (32) des Gehäuses und der rechte Teil (21) direkt mit einem anderen Endstück (31) des Gehäuses verbunden ist.

7. Flurförderfahrzeug nach Anspruch 6, wobei die Verteilerkanäle in ersten und zweiten Endstücken (31, 32) des Gehäuses eine ringförmige Rille (45, 46) enthalten, die zum Hohlkörper (33) des Gehäuses hin zur Verbindung mit dem Spalt (43) offen ist.

8. Flurförderfahrzeug nach einem der vorhergehenden Ansprüche, wobei der linke Teil (22) und der rechte Teil (21) mittels Flanschen (80) mit dem Gehäuse (31-33) verbunden sind.

9. Flurförderfahrzeug nach einem der vorhergehenden Ansprüche, wobei das Gehäuse (31, 32, 33) aus Gusseisen, vorzugsweise aus duktilem Gusseisen, ausgebildet ist, wobei die Außenfläche (34) des Gehäuses aus Rohguss ausgebildet ist, wobei eine Schicht (36) aus wärmeleitendem Material an der Außenfläche (34) befestigt ist und das leistungselektronische Modul (35) auf der Schicht aus wärmeleitendem Material (36) befestigt ist, wobei die Schicht (36) aus wärmeleitendem Material vorzugsweise mit einer pyrolytischen Graphitfolie, PGS, ausgebildet ist.

10. Flurförderfahrzeug nach einem der vorhergehenden Ansprüche, ferner umfassend einen Hebevorrichtungshydraulikkreislauf (60) zum Zuführen von Flüssigkeit zu einem oder mehreren hydraulischen Aktuatoren, die zum Bewegen des Hebeelements konfiguriert sind, wobei die in dem Hebevorrichtungshydraulikkreislauf zirkulierende Flüssigkeit mit der Kühlflüssigkeit identisch ist.

## Revendications

1. Chariot de manutention comprenant :
un châssis (11, 14),
un ensemble de levage (15) comprenant un élément de levage mobile (13) pour lever une charge (14),
au moins un moteur électrique (17) pour la traction des roues du chariot de manutention, et
une structure d'essieu (16) raccordée au châssis (14) du chariot au moyen de brides (52) et constituée par une partie gauche (22), une partie droite (21) et un boîtier (31, 32, 33) du moteur électrique, le boîtier (31, 32, 33) étant intercalé entre la partie gauche (22) et la partie droite (21), le boîtier (31, 32, 33) étant assemblé à chacune parmi la partie gauche (22) et la partie droite (21), dans lequel chacune parmi la partie gauche (22) et la partie droite (21) comprend des moyens de support (51) pour supporter l'ensemble de levage (15), et le boîtier du moteur électrique est configuré pour résister à une contrainte de flexion induite dans le boîtier par le poids de l'ensemble de levage,
**caractérisé en ce que** :
le boîtier comprend une surface externe (34) sur laquelle est monté un module électronique de puissance (35) pour commander le moteur électrique,
dans lequel une partie circonférentielle du boîtier (33) entourant le moteur électrique autour d'un axe de moteur comprend un ou plusieurs conduits de refroidissement (41) uniquement dans une région entre un évidement (70) du boîtier configuré pour loger le moteur électrique (17) et la surface externe (34) pour refroidir le module électronique de puissance pendant le fonctionnement du chariot de manutention, et dans lequel un interstice (43) entre un stator (18) et un rotor (19) du moteur électrique forme une trajectoire de refroidissement pour la circulation du liquide de refroidissement afin de réfrigérer le moteur électrique.

2. Chariot de manutention selon la revendication 1, dans lequel le rotor (19) comprend une pluralité de rainures définissant, conjointement avec une surface interne du stator (18), une pluralité de conduits de refroidissement (43) rotatifs entourant le rotor (19).

3. Chariot de manutention selon la revendication 2, dans lequel la surface circonférentielle externe du rotor (19) comprend une pluralité de lobes (61) successifs, dans lequel chacune des rainures est entre les lobes (91) adjacents.

4. Chariot de manutention selon la revendication 3, dans lequel le nombre de lobes (91) est compris entre 5 et 10.

5. Chariot de manutention selon l'une quelconque des revendications précédentes, dans lequel le boîtier (31, 32, 33) comprend un corps longitudinalement creux (33) formant l'évidement (70) pour loger le moteur électrique (17) et deux pièces d'extrémité (31, 32), les deux pièces d'extrémité (31, 32) étant fixées respectivement aux extrémités longitudinales opposées du corps longitudinalement creux (33), dans lequel un premier conduit de collecteur (45, 83a) est formé dans l'une des deux pièces d'extrémité (31) et un second conduit de collecteur (46, 84a) est formé dans l'autre des deux pièces d'extrémité (32), dans lequel les un ou plusieurs conduits de refroidissement (41) et l'interstice (43) sont en communication avec les premier et second conduits de collecteur pour recevoir et faire sortir le liquide de refroidissement.

6. Chariot de manutention selon la revendication 5, dans lequel la partie gauche (22) est directement raccordée à une pièce d'extrémité (32) du boîtier et la partie droite (21) est directement raccordée à l'autre pièce d'extrémité (31) du boîtier.

7. Chariot de manutention selon la revendication 6, dans lequel les conduits de collecteur dans les première et seconde pièces d'extrémité (31, 32) du boîtier comprennent une rainure annulaire (45, 46) qui est ouverte vers le corps creux (33) du boîtier pour communiquer avec l'interstice (43) .

8. Chariot de manutention selon l'une quelconque des revendications précédentes, dans lequel la partie gauche (22) et la partie droite (21) sont raccordées au boîtier (31-33) au moyen de brides (80).

9. Chariot de manutention selon l'une quelconque des revendications précédentes, dans lequel le boîtier (31, 32, 33) est formé avec de la fonte, de préférence avec de la fonte ductile, dans lequel la surface externe (34) du boîtier est formée avec de la fonte brute, dans lequel une couche (36) de matériau thermiquement conducteur est fixée sur la surface externe (34) et le module électronique de puissance (35) est fixé sur la couche de matériau conducteur (36), dans lequel la couche (36) de matériau thermiquement conducteur est de préférence formée avec une feuille de graphite pyrolytique PGS.

10. Chariot de manutention selon l'une quelconque des revendications précédentes, comprenant en outre un circuit hydraulique d'ensemble de levage (60) pour alimenter le liquide à un ou plusieurs actionneurs hydrauliques configurés pour déplacer l'élément de levage, dans lequel le liquide circulant dans le circuit hydraulique d'ensemble de levage est le même que le liquide de refroidissement.
